(19) Europäisches Patentamt
European Patent Office
Office européen des brevets

(11) Veröffentlichungsnummer: **0 457 070 A1**

(12) **EUROPÄISCHE PATENTANMELDUNG**

(21) Anmeldenummer: 91106646.2

(51) Int. Cl.5: **B60B 5/02**

(22) Anmeldetag: 25.04.91

(30) Priorität: 09.05.90 DE 4014789

(43) Veröffentlichungstag der Anmeldung:
21.11.91 Patentblatt 91/47

(84) Benannte Vertragsstaaten:
DE FR GB IT

(71) Anmelder: **Dr.Ing.h.c. F. Porsche Aktiengesellschaft**
**Porschestrasse 42**
**W-7000 Stuttgart 40(DE)**

(72) Erfinder: **Hoenes, Rolf**
**Weissacher Strasse 5**
**W-7251 Mönsheim(DE)**

(54) **Verfahren zum Herstellen einer verchromten Felge.**

(57) Ein Verfahren zum Herstellen einer verchromten Felge für Kraftfahrzeug-Räder, insbesondere einer Gußfelge aus einer Aluminium-Legierung umfaßt folgende Verfahrensschritte:

a) Die unbearbeitete Gußfelge (1) wird in ein die Sichtfläche (3) mit Abstand umschließendes Werkzeug (2) eingelegt.

b) Im verbleibenden Raum (5) zwischen der Sichtfläche und der Innenfläche des Werkzeugs wird galvanisierfähiger Kunststoff eingespritzt, der die Sichtfläche gleichmäßig abdeckt.

c) Auf die Außenoberfläche des gespritzten Kunststoffs wird eine Chromschicht galvanisiert.

Die mit der Erfindung hauptsächlich erzielten Vorteile bestehen darin, daß durch die Zwischenschicht aus einem elastischen und isolierenden Kunststoff, es bei einer Beschädigung der Chromschicht zu keiner Kontaktkorrosion führen kann.

FIG.1

EP 0 457 070 A1

Die Erfindung bezieht sich auf ein Verfahren und eine Vorrichtung zur Herstellung einer verchromten Felge nach dem Oberbegriff des Anspruchs 1.

Fahrzeugfelgen aus Leichtmetall-Legierungen, wie z.B. aus Al- oder Mg-Legierungen werden zu dekorativen Gründen häufig verchromt. Dabei werden Überzugsmetalle z.B. aus Kupfer/Nickel/Chrom oder Nickel/Chrom verwendet. Dieses Metalle reagieren bei einer Beschädigung durch Kontaktkorrosion elektrochemisch mit dem Grundmetall der Felge, derart, daß diese angegriffen wird und ein Lochfraß entsteht, wodurch die Dauerfestigkeit der Felge nachteilig beeinflußt wird.

Aufgabe der Erfindung ist es, ein Verfahren und eine Vorrichtung zur Herstellung einer verchromten Felge zu schaffen, durch das eine große Dauerfestigkeit gewährleistet ist.

Diese Aufgabe wird erfindungsgemäß durch die Merkmale des Anspruchs 1 sowie durch die Merkmale der Unteransprüche gelöst.

Die mit der Erfindung hauptsächlich erzielten Vorteile bestehen darin, daß durch die Zwischenschicht aus einem elastischen und isolierenden Kunststoff, es bei einer Beschädigung der Chromschicht zu keiner Kontaktkorrosion führen kann. Die Kunststoffschicht ist zur Chromschicht mit Abstand angeordnet, der durch die Zwischenschicht gebildet wird, so daß z.B. ein die Chromschicht durchschlagender Stein keine mechanische Verbindung zur Gußfelge herstellt, da ein Eindringen der Chromschicht in den Felgenwerkstoff nicht möglich wird. Hierdurch ist ein Lochfraß durch ein elektrochemische Reaktion unterbunden.

Durch das Einlegen der Felge in ein Werkzeug bzw. in eine Spritzform kann die Kunststoffschicht auf die Sichtfläche der Felge gleichmäßig aufgetragen werden. Die entsprechenden Spritzverfahren sowie die hierzu erforderlichen Einrichtungen sind bekannt.

Die Spritzform kann je nach der zu schaffenden optischen Ansicht eine glatte oder mit Rippen versehene äußere Oberfläche aufweisen, wodurch die Oberfläche der Kunststoffschicht formgestaltend beeinflußbar ist.

Zur Aufbringung einer Chromschicht auf die Kunststoffschicht, ist diese galvanisierfähig und besteht vorzugsweise aus Polyamid, ABB oder PP.

Die Gußfelge ist an der Sichtfläche zur Aufbringung der Kunststoffschicht unbearbeitet, was kostensparend ist.

Eine Aufbringung einer Lackierung statt der Chromschicht ist ebenfalls ohne weiteres möglich, da eine Vorbehandlung der Kunststoffschicht nicht erforderlich ist, da die Oberfläche der Schicht durch das Werkzeug glattflächig ausgeführt werden kann.

Ein Ausführungsbeispiel der Erfindung ist in der Zeichnung dargestellt und wird im folgenden näher beschrieben.

Es zeigen

Fig.1 eine schematische Darstellung einer in eine Spritzgußform eingelegten Felge im Schnitt und

Fig.2 die Felge mit einer Kunststoffschicht und einer Chrom bzw. Lackschicht.

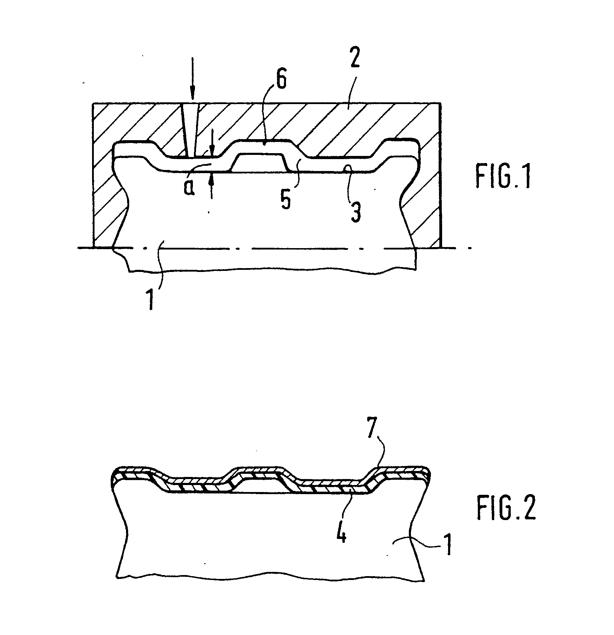

In Fig.1 ist eine Gußfelge 1 in einem Werkzeug, wie z.B. einer Spritzform 2 schematisch dargestellt gezeigt, welche zur Sichtfläche 3 im Abstand a angeordnet ist. Zum Aufbringen einer Kunststoffschicht 4 auf die Sichtfläche 3 der Felge 1 wird Kunststoff in den Raum 5 zwischen der Sichtoberfläche 3 der Felge 1 und der Innenfläche 6 der Form 2 gespritzt. Hierzu ist in der Spritzform 2 eine Einführöffnung vorgesehen.

Die Innenfläche 6 des Werkzeugs ist glattflächig ausgeführt, so daß sich eine entsprechende Oberfläche der Kunststoffschicht 4 ergibt. Mit diesem Kunststoff der galvanisierfähig ausgeführt ist, wird eine Chromschicht 7 verbunden, wie in Fig. 2 schematisch dargestellt ist.

In der Spritzform 2 kann die Innenfläche 6 mit Rippen oder dergleichen ausgeführt sein, die sich dann im Kunststoff entsprechend abbilden und die Oberfläche der Felge 1 gestaltend beeinflußen.

Durch dieses Verfahren zum Aufbringen einer Kunststoff- und Chromschicht auf die Außenoberfläche der Felge 1, ist es möglich dieser eine dekorative hochglänzende Oberfläche zu geben und die nachteilige Wirkung eines möglichen Lochfrasses durch Kontaktkorrosion kann vermieden werden.

**Patentansprüche**

1. Verfahren zum Herstellen einer verchromten Felge für Kraftfahrzeug-Räder, insbesondere einer Gußfelge aus einer Aluminium-Legierung, **gekennzeichnet durch** folgende Verfahrensschritte:

a) Die unbearbeitete Gußfelge wird in ein die Sichtfläche mit Abstand umschließendes Werkzeug eingelegt.

b) Im verbleibenden Raum zwischen der Sichtfläche und der Innenfläche des Werkzeugs wird galvanisierfähiger Kunststoff eingespritzt, der die Sichtfläche gleichmäßig abdeckt.

c) Auf die Außenoberfläche des gespritzten Kunststoffs wird eine Chormschicht galvanisiert.

2. Verfahren nach Anspruch 1, **dadurch gekennzeichnet**, daß auf die Sichtfläche eine Zwischenschicht aus einem elastischen, isolierenden Kunststoff aufgespritzt wird.

3. Vorrichtung zur Durchführung des Verfahrens nach den Ansprüchen 1 oder 2, **dadurch gekennzeichnet**, daß die Innenfläche (6) des Werkzeugs (2) aus einer glatten Oberfläche besteht.

4. Vorrichtung zur Durchführung des Verfahrens nach den Ansprüchen 1 oder 2, **dadurch gekennzeichnet**, daß die Innenoberfläche (6) des Werkzeugs (2) rillenförmige Ausnehmungen aufweist, die sich als erhabene Rippen in der Kunststoffschicht der Felge abbilden.

5. Vorrichtung zur Durchführung des Verfahrens nach den Ansprüchen 1 oder 2, **dadurch gekennzeichnet**, daß die Innenoberfläche (6) des Werkzeugs (2) erhabene Rippen aufweist, die sich als rillenförmige Ausnehmungen in der Kunststoffschicht der Felge abbilden.

6. Vorrichtung nach einem mehreren der vorhergehenden Ansprüche, **dadurch gekennzeichnet**, daß die Oberfläche der Kunststoffschicht der Felge mit einer Lackierung versehen ist.

FIG.1

FIG.2

# EUROPÄISCHER RECHERCHENBERICHT

Nummer der Anmeldung

## EP 91 10 6646

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-4 471 999 (BROWNE)<br>* Spalte 2, Zeilen 26-46 *<br>– – – | 1,2 | B 60 B 5/02 |
| A | US-A-3 815 200 (ADAMS)<br>– – – | | |
| A | US-A-3 968 996 (WILCOX)<br>– – – – – | | |

| RECHERCHIERTE SACHGEBIETE (Int. Cl.5) |
|---|
| B 60 B |

Der vorliegende Recherchenbericht wurde für alle Patentansprüche erstellt

| Recherchenort | Abschlußdatum der Recherche | Prüfer |
|---|---|---|
| Den Haag | 27 August 91 | NGUYEN THE NGHIEP |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

&: Mitglied der gleichen Patentfamilie, übereinstimmendes Dokument